# EUROPEAN PATENT SPECIFICATION

(11) **EP 0 426 912 B1**
(45) Date of publication and mention of the grant of the patent: **15.03.1995**
(21) Application number: 89311467.8
(22) Date of filing: 06.11.1989
(51) Int. Cl.: C08K 5/58, C08L 23/02

(54) **Antioxidant polyolefin compositions**
Ein Antioxidant enthaltende Polyolefinzusammensetzungen
Compositions d'antioxydant et de polyoléfine

(43) Date of publication of application: 15.05.1991
(73) Proprietor: ELF ATOCHEM NORTH AMERICA, INC., Philadelphia Pennsylvania 19102-3222 (US)
(72) Inventor: Smith, William L., Basking Ridge, N.J. (US); Ranceze, Dominique, F-64230 Lescar (FR); Foure, Michel J., F-78600 Maisons Laffitte (FR); Tozzolino, Pierre, F-64170 Artix (FR)
(74) Representative: Paget, Hugh Charles Edward

(56) References cited:
- EP-A- 0 011 456
- CH-A- 470 436
- US-A- 4 113 678
- US-A- 4 181 671
- US-A- 4 508 863
- WPI 68-078229 (JP-B-43 013376)

## Description

This invention relates to polyolefin compositions, and, more particularly, to antioxidant-containing polyolefin compositions which are particularly effective in providing antioxidant stabilization at relatively low concentration levels.

Polyolefins, such as polyethylene, polypropylene and the like, are known to be susceptible to degradation in air. The effect of oxygen upon the polyolefin causes oxidation of carbon-hydrogen bonds in the molecule, resulting in embrittlement and color deterioration or yellowing of the polymer. In addition, the polymer can experience a loss of molecular weight upon cleavage in the presence of oxygen, which effect is measurable as a change in the melt flow index of the polymer.

These oxidative reactions can be slowed down by including an antioxidant material in the polymer composition. Suitable antioxidants for polyolefins are hindered phenols, that is, phenols which are substituted with large alkyl groups in the ortho positions of the phenol. The hindered phenols preferably are used in combination with other antioxidants, including thioesters, e.g. thiodipropionic acid esters; organic phosphites; and hindered amines (HALS). However, such secondary antioxidants require a rather high concentration level to be effective.

The problem addressed by the invention is to provide new and effective antioxidant-containing polyolefin compositions which will advantageously prevent the polyolefins from undergoing a significant color change in air or of suffering a loss in molecular weight during processing.

It is preferred to provide such compositions in which the antioxidant is effective at relatively low concentration levels.

US-A-3442852 (and CH-470436) describe the use of organotin stabilisers for vinyl chloride polymers.

US-A-4508863 also describes organotin stabilisers, including those of US-A-3442852, exclusively for stabilising polyvinyl chloride polymers. A branched oligomer is used additionally, to assist the stabilizing affect. The stabilising mechanism is described as involving the chlorine groups of the polymer.

JP-B-43/013376 describes reducing the melt viscosity of crystalline polypropylene compositions by incorporating a paraffin chloride together with one or more organic tin compounds. The specified tin compounds do not include any such as are used in the present invention as set out below.

EP-A-11456 is another document describing relevant organotin compounds, but exclusively in relation to halogen-containing polymers.

The antioxidant -containing polyolefin compositions of the invention are characterized particularly by including an antioxidant of general formula: 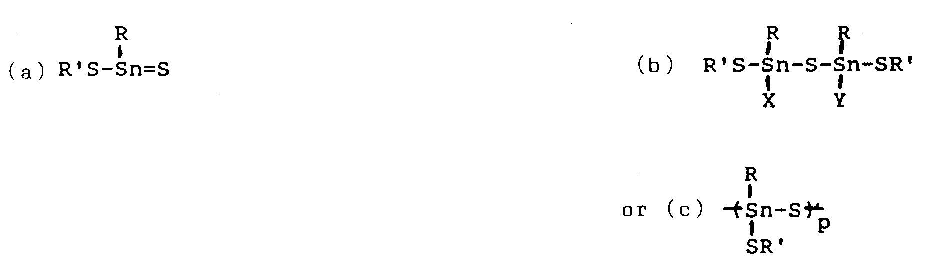
where p is 2 or more.

Suitably, R and R' X and Y are the same or different and are selected from alkyl, phenyl, cyclohexyl, a substituent with one or more carboxylic ester linkages, hydroxyalkyl, and aralkyl, which groups may be unsubstituted or substituted, linear or branched, or cyclic.

However it should be understood that the formulae are merely representative of reaction products obtained from precursor materials. The general precursors are a mono- or bi-organotin di- or tri-halide and an organic mercaptan. Their reaction product is reacted with an inorganic sulfide.

The polyolefin antioxidant compositions of the invention are particularly characterized by a high induction period of stabilization of the polyolefin in air, and a low melt flow index, after extrusion.

In another aspect, the invention provides a method in which the antioxidant compound (as defined) is mixed with a polyolefin.

Typical antioxidant compounds for use in the composition of the invention are described in numerous patents and include the following: 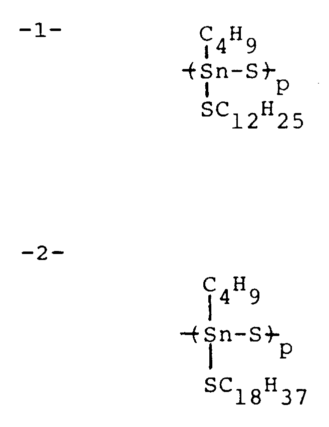 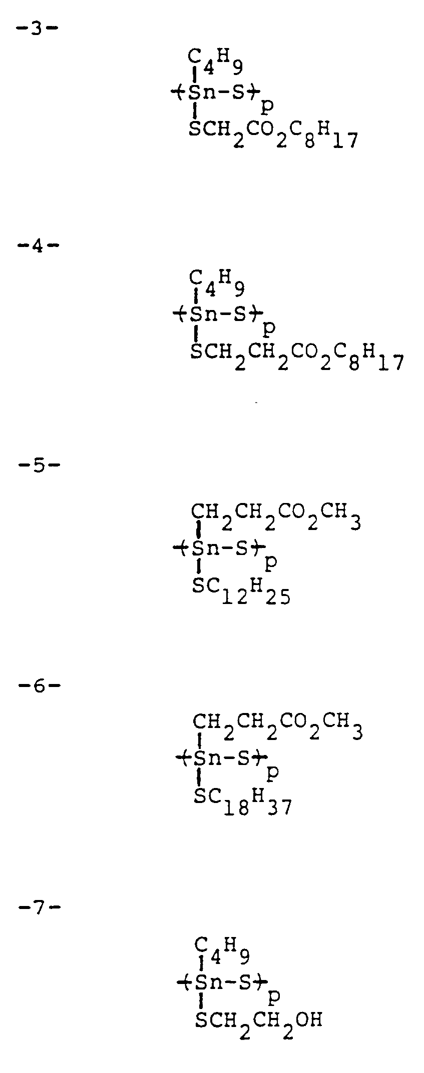 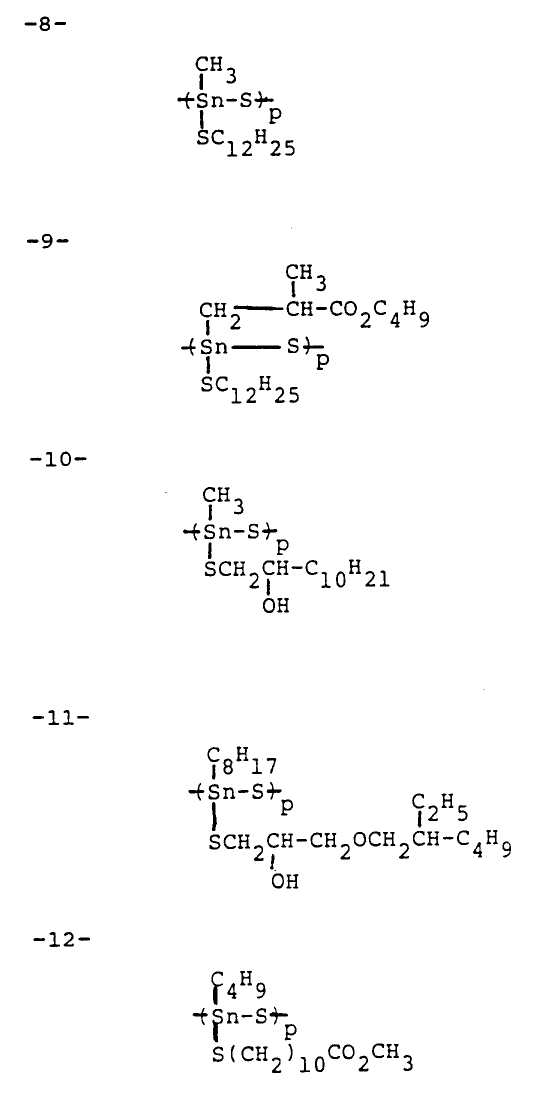 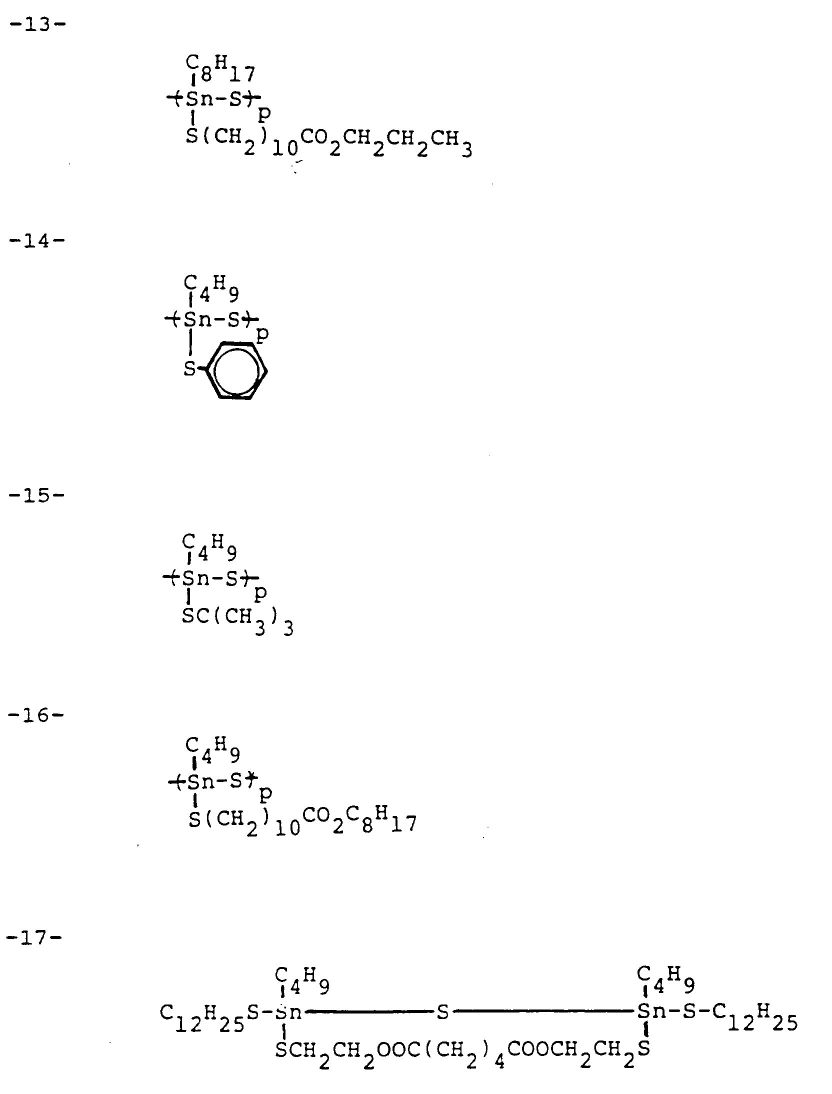
The antioxidant compounds according to the invention are incorporated in the polyolefin resin at a level of from 0.005% to 5% by weight of the resin. The concentration preferably used is from 0.005% to 2% and, most preferably, from 0.01% to 0.5%.

The composition also may include other antioxidants, too, for example, hindered phenols, thioesters, phosphites, HALS, etc.: and, other additives known in the art, such as mineral fillers, lubricants, UV absorbers, metal deactivators, flame retardants, antistats, pigments, etc.

The invention is illustrated by the non-limiting examples which follow.

### EXAMPLE 1

Preparation of:

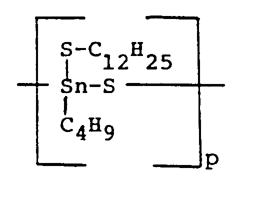

| Material | Amounts | Chemical Name |
|---|---|---|
| BuSnCl₃ | 148.5 | monobutyltin trichloride |
| n-C₁₂H₂₅SH | 60.7 | n-dodecyl mercaptan |
| NH₄OH | 17.4 | conc. ammonium hydroxide |
| Na₂Sx H₂O(60%) | 8.4 | hydrated sodium sulfide |
| H₂O | 100 | |
| Toluene | 217 | |

1. charge BuSnCl₃, n-C₁₂H₂₅SH, toluene, and H₂O to the pot.
2. add NH₄OH dropwise to the pot with stirring.
3. heat to 70°C, stir 1/2 hour.
4. cool to <50°C, then slowly add Na₂S.
5. heat to 65-70°C and stir 1/2 hour.
6. stop stirring, allow phases to split, remove aqueous phase.
7. vacuum strip the organic layer to 120°C max.
8. cool, then filter to give a clear yellow liquid; yield about 111 grams.

### EXAMPLE 2

Preparation of:

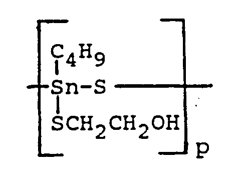

| Material | Amount | Chemical Name |
|---|---|---|
| BuSnCl₃ | 92.8 | |
| HOCH₂CH₂SH | 26.4 | 2-mercaptoethanol |
| Na₂S (60%) | 42.2 | |
| NaOH | 26.4 | concentrated solution |
| H₂O | 109 | |
| toluene | 85 | |

1. mixed BuSnCl₃, H₂O, HOCH₂CH₂SH, and toluene in a flask.
2. added NaOH solution dropwise with rapid stirring.
3. heated to 60°C, and stirring for 1/2 hour.
4. cooled pot temperature to 40°C, added Na₂S.
5. heated to 60°, and stirred for 1/2 hour.
6. stopped stirring, allowed phases to split, and removed aqueous phase.
7. vacuum stripped to 110°C, max.
8. cooled to give a light yellow, viscous product.

### EXAMPLE 3

A homogenous mixture is made from the antioxidant compound to be tested and polypropylene resin in powder form. The mixture is kneaded for 5 minutes at 180°C in a roll mill. The effectiveness of a given antioxidant is determined by subjecting a test composition to an oxygen atmosphere at 200°C. The onset of resin degradation is determined with a differential thermal analyser. The time necessary to observe degradation is referred to as the "induction time" of the antioxidant.

The antioxidant compounds according to the invention may be compared with commercial antioxidants, e.g., an hindered phenol, such as: 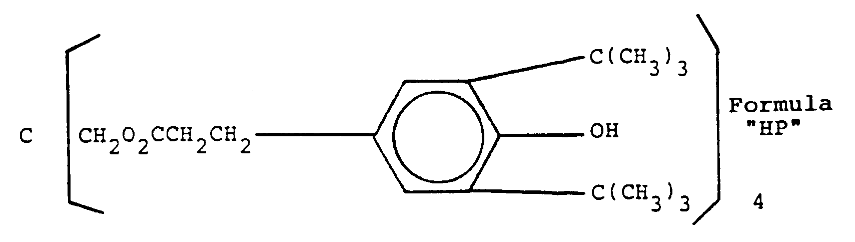
which can be used alone or in combination with distearyl thiodipropionate (DSTDP):

S(CH₂CH₂CO₂C₁₈H₃₇)₂

**TABLE I**

| Antioxidant Compounds | Concentration (ppm) | Induction Time (minutes) |
|---|---|---|
| none | - | 1 |
| "HP" | 1000 | 8 |
| "HP" | 1000 | 12 |
| DSTDP | 2000 | |
| 1 | 2000 | > 50 |
| 2 | 2000 | > 50 |
| 3 | 1000 | 37 |
| 4 | 1000 | > 50 |
| 4 | 500 | > 50 |
| 5 | 1000 | > 50 |
| 6 | 1000 | 48 |
| 17 | 2000 | > 50 |

These examples clearly show that, even when they are used alone, the tin derivatives embodying the invention effectively delay the degradation of the resin in the conditions of the test. Even at low concentrations the compounds exemplified are more efficient than the hindered phenols known in the prior art, whether combined with thioester (DSTDP) or not.

### EXAMPLE 4

In the following examples, the test mixtures are extruded with a single screw Buss extruder at 230°C, and then extruded five times consecutively with a twin screw extruder at 270°C. After each pass, a sample of the stabilized resin is taken in order to determine the melt flow index (MFI) at 230°C. A higher value of MFI indicates that the propylene is more degraded.

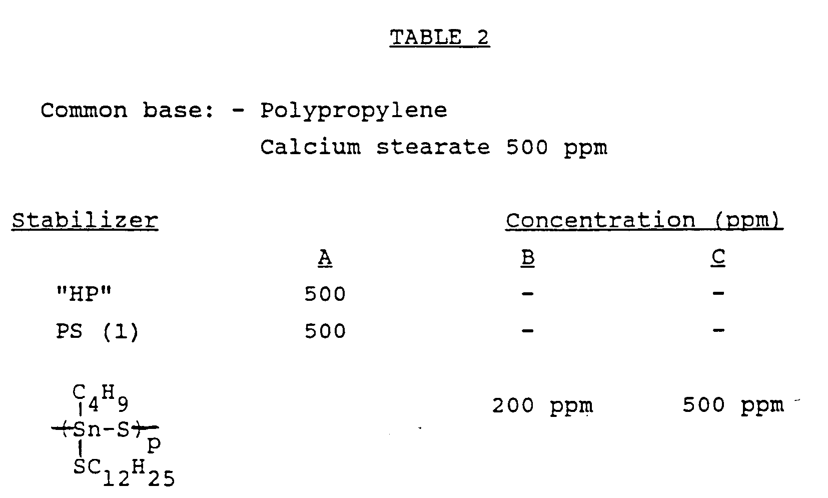

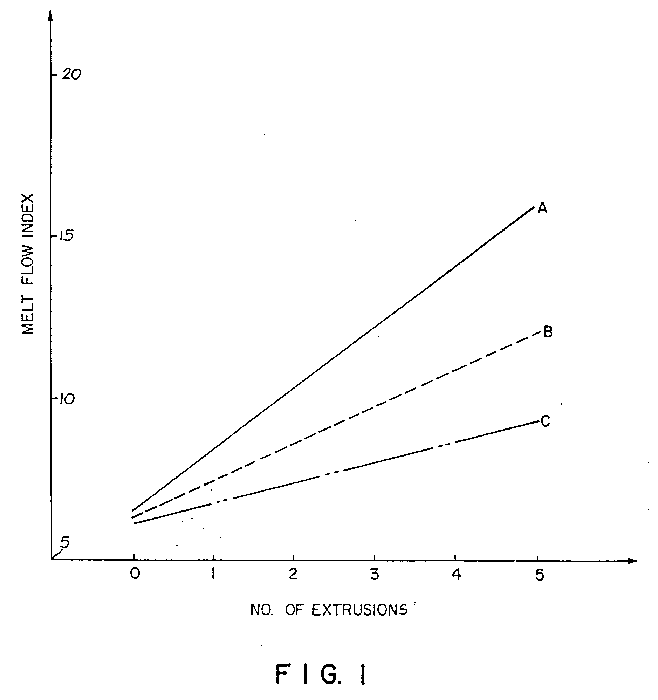

The results are shown in Figure 1. The formulations containing the tin derivative, embodying the invention,are much more stable than those containing the hindered phenol and phosphite.
(1) Phosphite solid

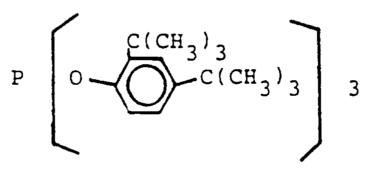

### EXAMPLE 5

The same common base and operating conditions as in the examples of Table 2 are used, using the compound of Example 2.

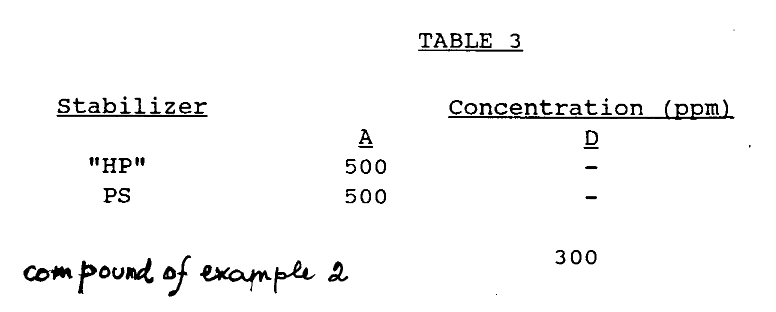

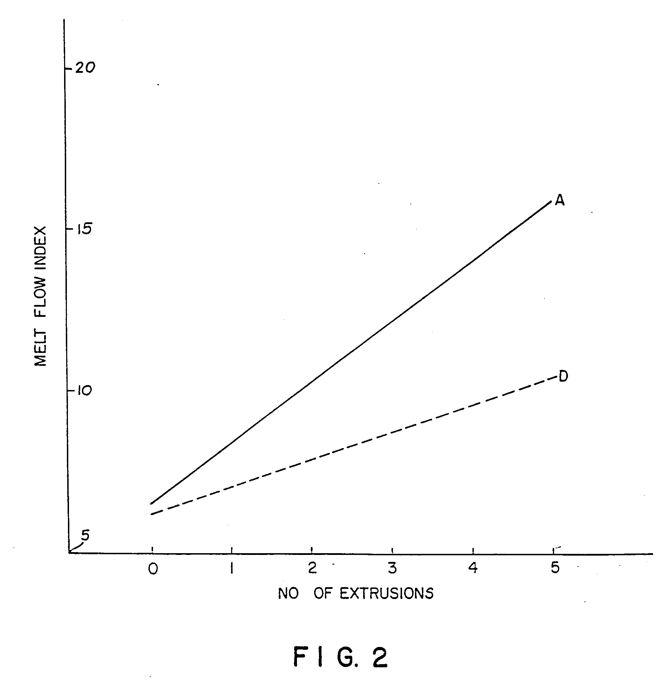

The results arc shown in Figure 2 where it is seen that use of a tin derivative as described imparts a far better protection to the resin than the systems known in the prior art.

While polyolefins are shown herein, it will be understood that blends of polyolefins with non-polyolefins may be used as well. The polyolefin may be e.g. a copolymer of ethylene and propylene.

As stated, the formulas herein are merely representations of reaction products obtained from precursor materials. In general, these products are made by reacting a mono or bisorganotin tri or dihalide,or mixture thereof, with an organic mercaptan in the presence of base, and then reacting the mixture with an inorganic sulfide. A representative organotin is monobutyltin chloride; representative mercaptans include mercapto esters, alcohols, aryl and alkyl mercaptans and bis(mercaptoalkyl esters).

## Claims (Claims for the following Contracting State(s): AT, BE, CH, DE, FR, GB, GR, IT, LI, LU, NL, SE)

1. An antioxidant-containing polyolefin composition comprising a polyolefin and an antioxidant compound having general formula: 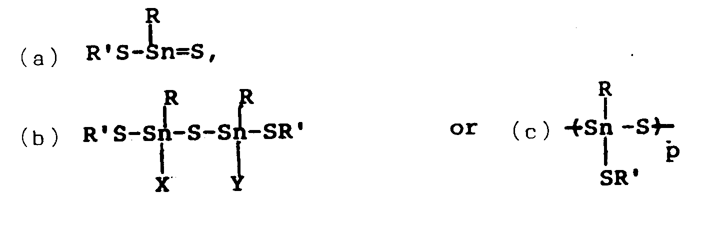 wherein R,R', X and Y are the same or different and are selected from alkyl, phenyl, cyclohexyl, a substituent with one or more carboxylic ester linkages, hydroxyalkyl, and aralkyl; and p indicates a degree of polymerization and is at least 2.

2. An antioxidant-containing polyolefin composition according to claim 1 wherein said antioxidant compound is:

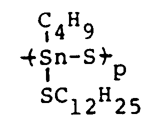

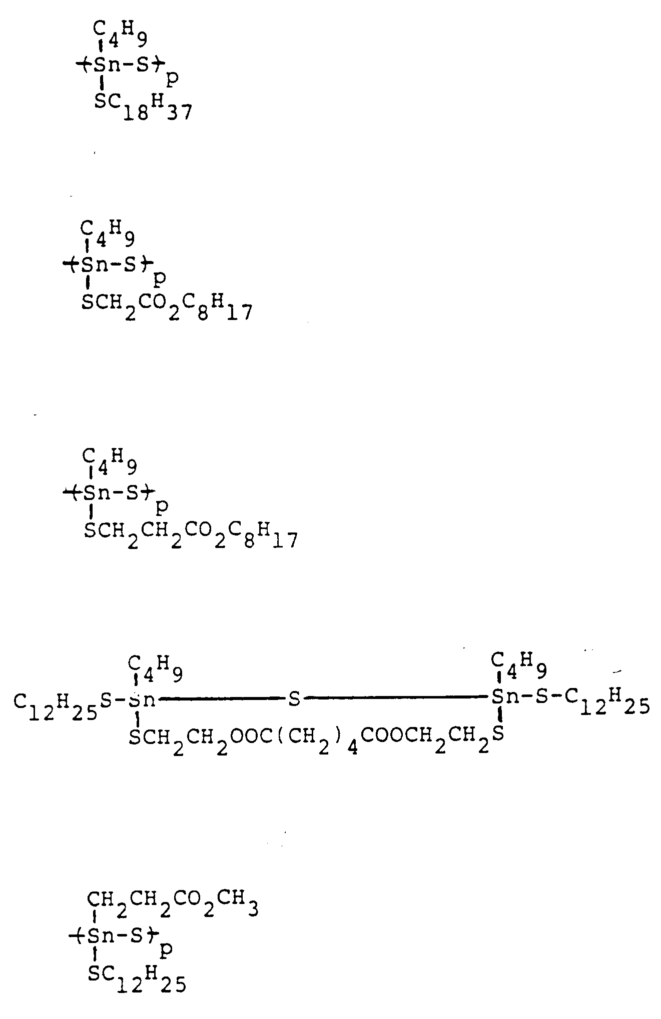

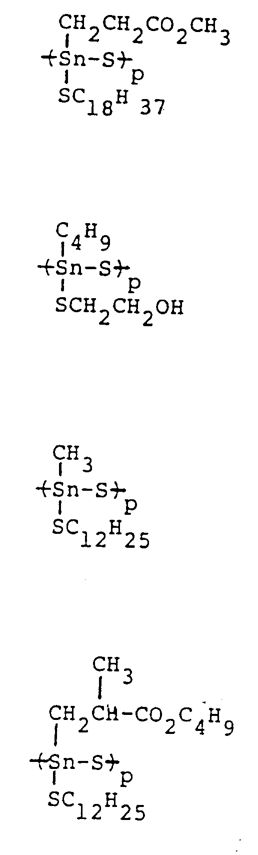

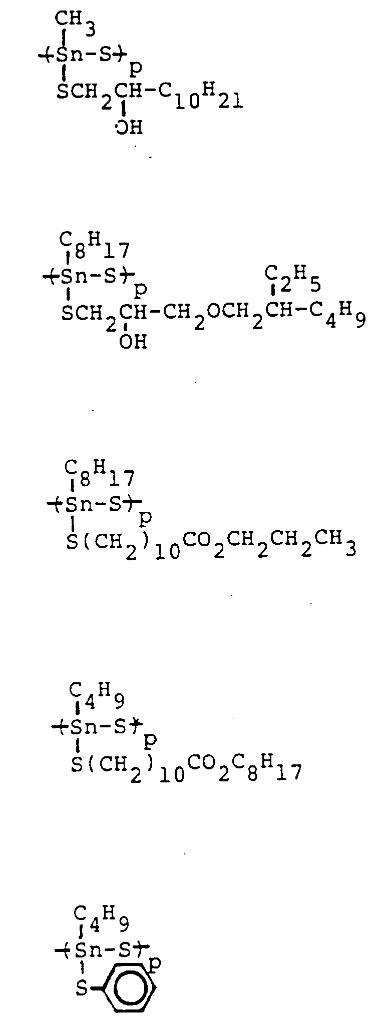

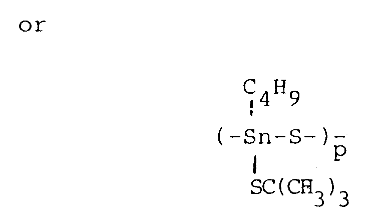

3. An antioxidant-containing polyolefin composition according to claim 1 or claim 2 wherein said antioxidant is present at a concentration of 0.005 to 5% by weight of the resin.

4. An antioxidant-containing polyolefin composition according to claim 3 wherein said concentration is about 0.01 to 0.5%.

5. A composition according to any one of the preceding claims which is a resin blend comprising polyolefin.

6. A composition according to any one of the preceding claims in which the polyolefin is a copolymer of ethylene and propylene.

7. A composition according to any one of the preceding claims wherein said compound is a reaction product made by reacting a mono or diorganotin tri or dihalide, or mixture thereof, with an organic mercaptan, in the presence of base, and then reacting the mixture obtained with an inorganic sulfide.

8. A method of making an oxidation-resistant polyolefin composition according to any one of claims 1 to 7, comprising mixing the polyolefin compound with the antioxidant compound.

9. Use of a compound having the general formula: 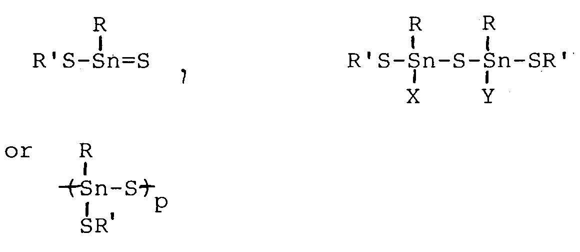 in which R,R', X and Y are the same or different and are alkyl, phenyl, cyclohexyl, a mono or polyfunctional carboxylic acid ester, hydroxyalkyl or aralkyl, which groups may optionally be substituted; linear, branched or cyclic, and p is 2 or more;
as an antioxidant for a polyolefin composition.

10. Use according to claim 9, in the amount of 0.005% to 5% based on the weight of the polyolefin or resin comprising polyolefin.

## Claims (Claims for the following Contracting State(s): ES)

1. A method of making an antioxidant-containing polyolefin composition, comprising mixing a polyolefin with an antioxidant compound having general formula: 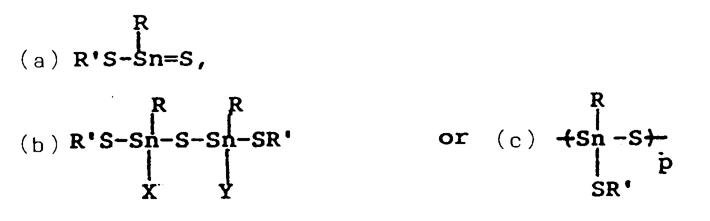 wherein R,R', X and Y are the same or different and are selected from alkyl, phenyl, cyclohexyl, a substituent with one or more carboxylic ester linkages, hydroxyalkyl, and aralkyl; and p indicates a degree of polymerization and is at least 2.

2. A method according to claim 1 wherein said antioxidant compound is:

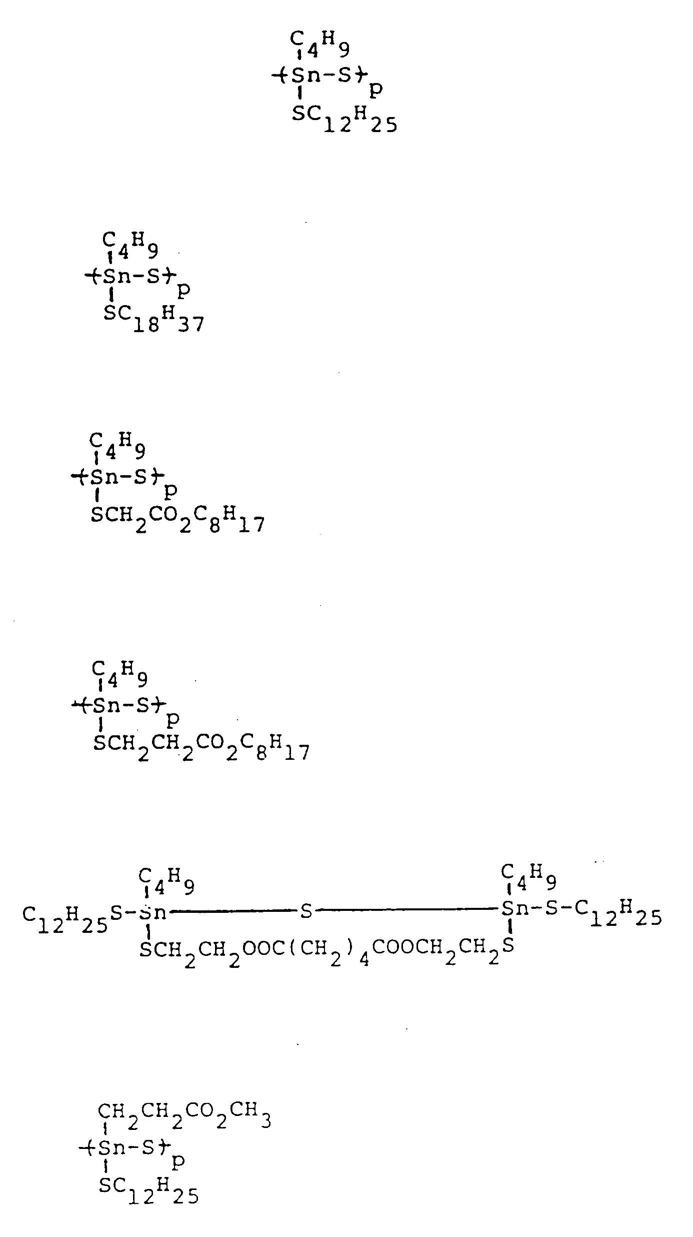

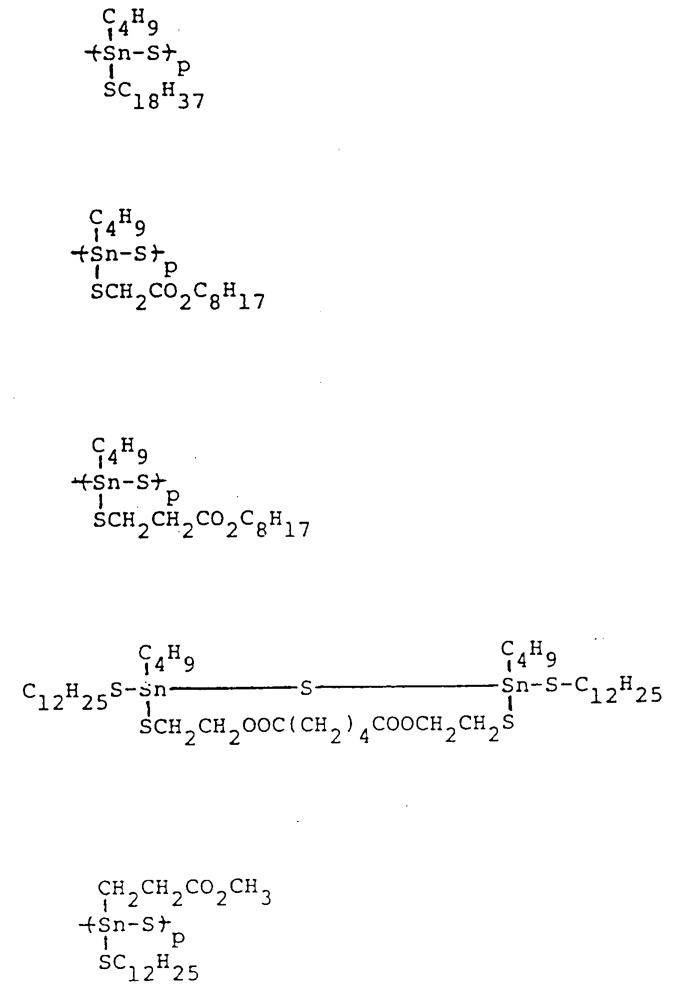

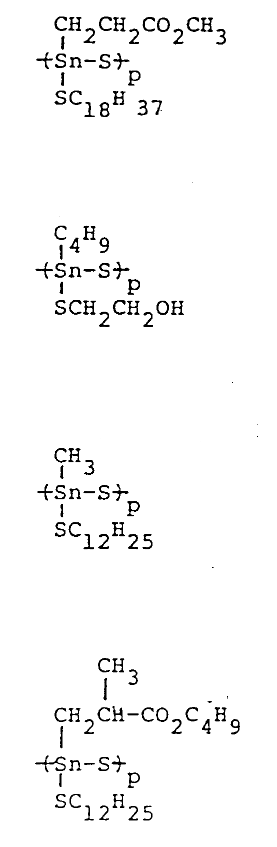

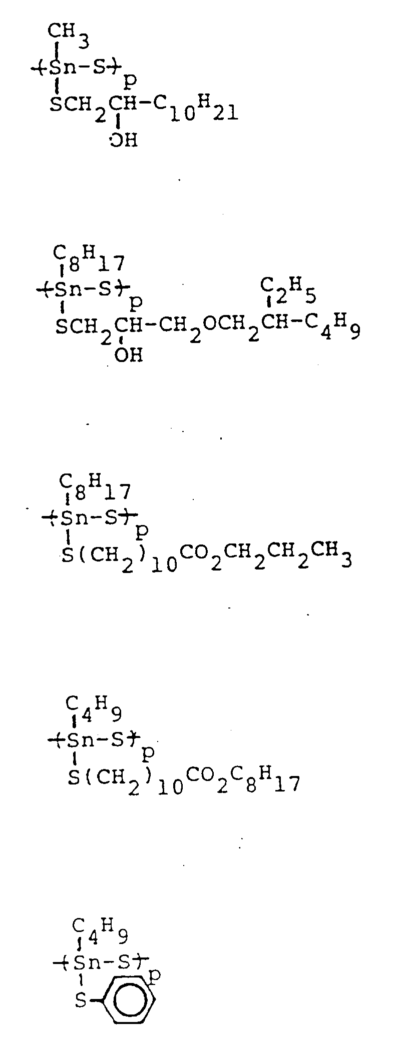

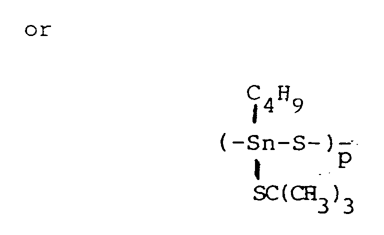

3. A method according to claim 1 or claim 2 wherein said antioxidant is mixed at a concentration of 0.005 to 5% by weight of the resin.

4. A method according to claim 3 wherein said concentration is about 0.01 to 0.5%.

5. A method according to any one of the preceding claims in which the composition is a resin blend comprising the polyolefin.

6. A method according to any one of the preceding claims in which the polyolefin is a copolymer of ethylene and propylene.

7. A method according to any one of the preceding claims wherein said compound is a reaction product made by reacting a mono or diorganotin tri or dihalide, or mixture thereof, with an organic mercaptan, in the presence of base, and then reacting the mixture obtained with an inorganic sulfide.

8. Use of a compound having the general formula: 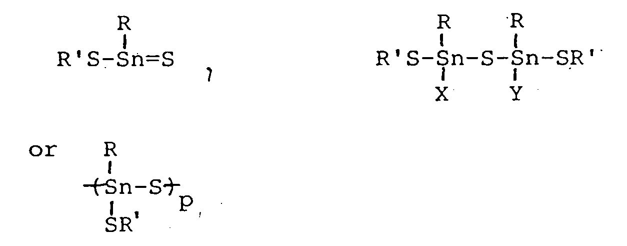 in which R,R', X and Y are the same or different and are alkyl, phenyl, cyclohexyl, a mono or polyfunctional carboxylic acid ester, hydroxyalkyl or aralkyl, which groups may optionally be substituted; linear, branched or cyclic, and p is 2 or more;
as an antioxidant for a polyolefin composition.

9. Use according to claim 8, in the amount of 0.005% to 5% based on the weight of the polyolefin or resin comprising polyolefin.

## Patentansprüche (Patentansprüche für folgende(n) Vertragsstaat(en): AT, BE, CH, DE, FR, GB, GR, IT, LI, LU, NL, SE)

1. Antioxidans enthaltende Polyolefinmasse, enthaltend ein Polyolefin und eine Antioxidans-Verbindung der allgemeinen Formel: 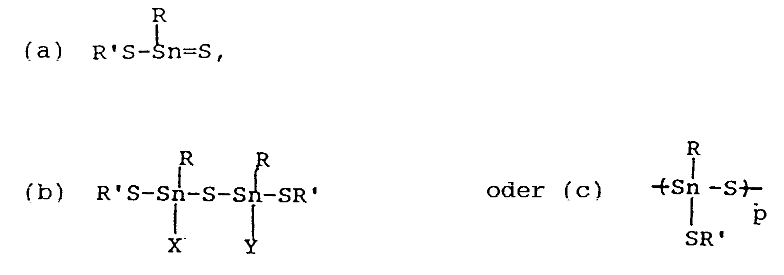 worin R, R', X und Y Gleich oder verschieden sind und aus Alkyl, Phenyl, Cyclohexyl, einem Substituenten mit einer oder mehreren Carbonsäureester-Verknüpfungen, Hydroxyalkyl und Aralkyl ausgewählt sind; und p den Polymerisationsgrad angibt und mindestens 2 beträgt.

2. Antioxidans enthaltende Polyolefinmasse nach Anspruch 1, dadurch **gekennzeichnet**, daß es sich bei der Antioxidans-Verbindung um 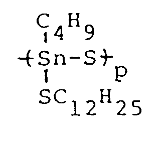 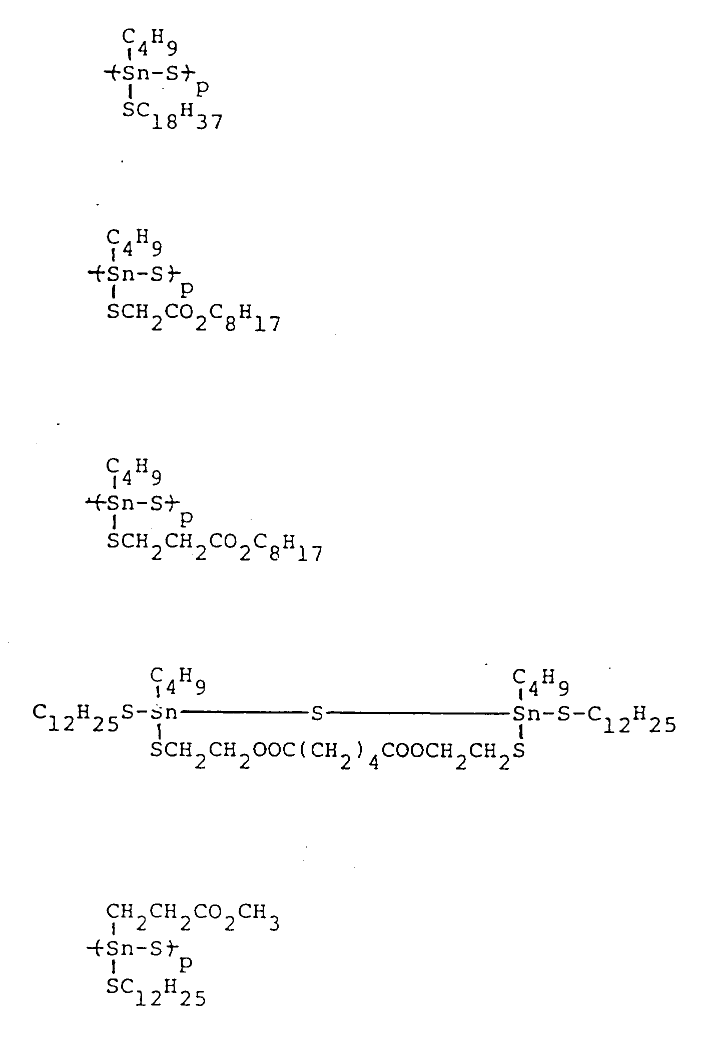 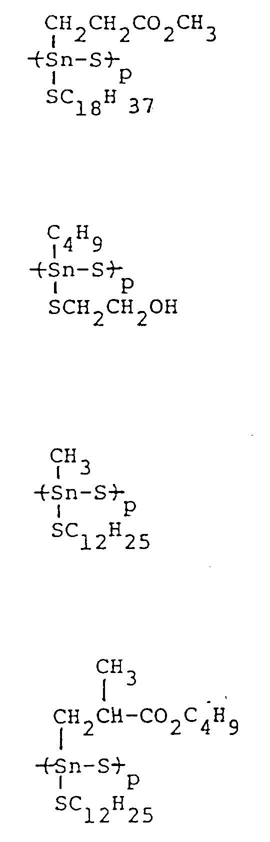 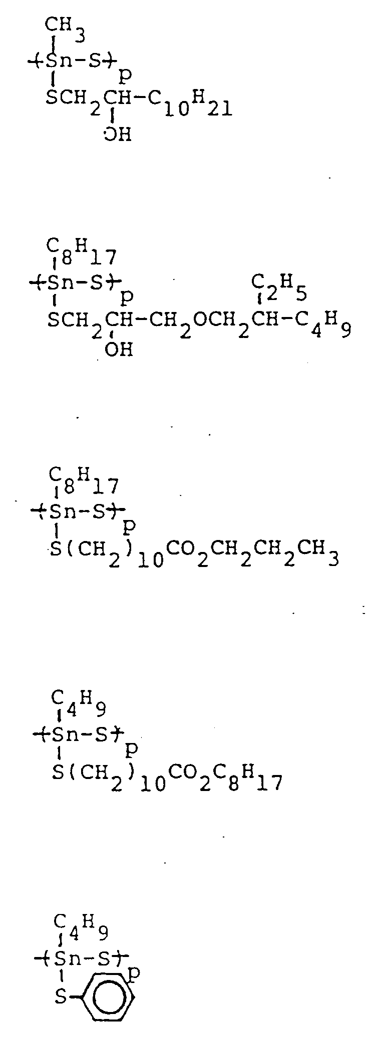 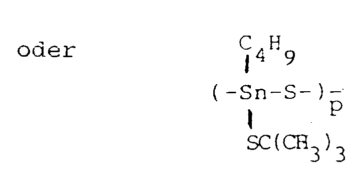 handelt.

3. Antioxidans enthaltende Polyolefinmasse nach Anspruch 1 oder 2, dadurch **gekennzeichnet**, daß das Antioxidans in einer Konzentration von 0,005 bis 5 Gew.-%, bezogen auf das Harz, vorliegt.

4. Antioxidans enthaltende Polyolefinmasse nach Anspruch 3, dadurch **gekennzeichnet**, daß die Konzentration etwa 0,01 bis 0,5% beträgt.

5. Masse nach einem der vorstehenden Ansprüche, dadurch **gekennzeichnet,** daß es sich um eine Harzmischung handelt, die ein Polyolefin enthält.

6. Masse nach einem der vorstehenden Ansprüche, dadurch **gekennzeichnet,** daß das Polyolefin ein Copolymeres aus Ethylen und Propylen ist.

7. Masse nach einem der vorstehenden Ansprüche, dadurch **gekennzeichnet,** daß die genannte Verbindung ein Reaktionsprodukt, hergestellt durch Umsetzen eines Mono- oder Diorganozinntri- oder -dihalogenids, oder einer Mischung davon mit einem organischen Mercaptan in Gegenwart einer Base und durch anschließendes Umsetzen des erhaltenen Gemisches mit einem anorganischen Sulfid ist.

8. Verfahren zur Herstellung einer oxidationsbeständigen Polyolefinmasse nach einem der Ansprüche 1 bis 7, dadurch **gekennzeichnet,** daß man die Polyolefinverbindung mit der Antioxidans-Verbindung mischt.

9. Verwendung einer Verbindung der allgemeinen Formel 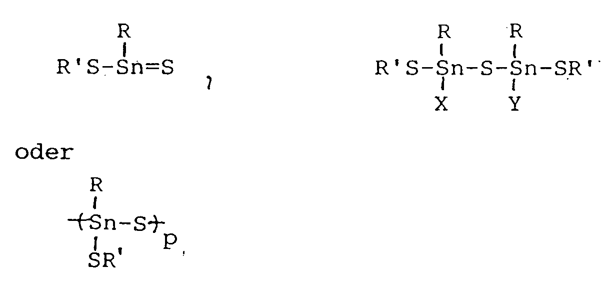 worin R, R', X und Y gleich oder unterschiedlich sind und Alkyl, Phenyl, Cyclohexyl₁ einen mono- oder polyfunktionellen Carbonsäureester, Hydroxyalkyl oder Aralkyl bedeuten, wobei diese Gruppen gegebenenfalls substituiert, linear, verzweigt oder cyclisch sein können und p 2 oder mehr beträgt; als Antioxidans für eine Polyolefinmasse.

10. Verwendung nach Anspruch 9 dadurch **gekennzeichnet**, daß die Menge 0,005% bis 5%, bezogen auf das Gewicht des Polyolefins oder des Polyolefin enthaltenden Harzes beträgt.

## Patentansprüche (Patentansprüche für folgende(n) Vertragsstaat(en): ES)

1. Verfahren zur Herstellung einer ein Antioxidans enthaltenden Polyolefinmasse, dadurch **gekennzeichnet**, daß man ein Polyolefin mit einer Antioxidans-Verbindung der allgemeinen Formel: 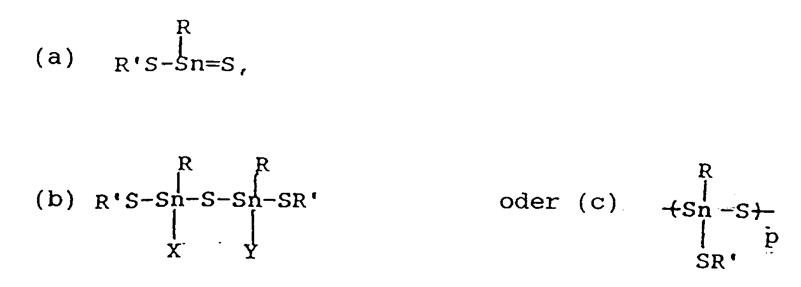 worin R, R', X und Y gleich oder verschieden sind und aus Alkyl, Phenyl, Cyclohexyl, einem Substituenten mit einer oder mehreren Carbonsäureester-Verknüpfungen, Hydroxyalkyl und Aralkyl ausgewählt sind; und p den Polymerisationsgrad angibt und mindestens 2 beträgt, vermischt.

2. Verfahren nach Anspruch 1, dadurch **gekennzeichnet,** daß es sich bei der Antioxidans-Verbindung um 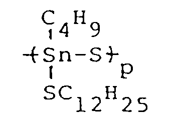 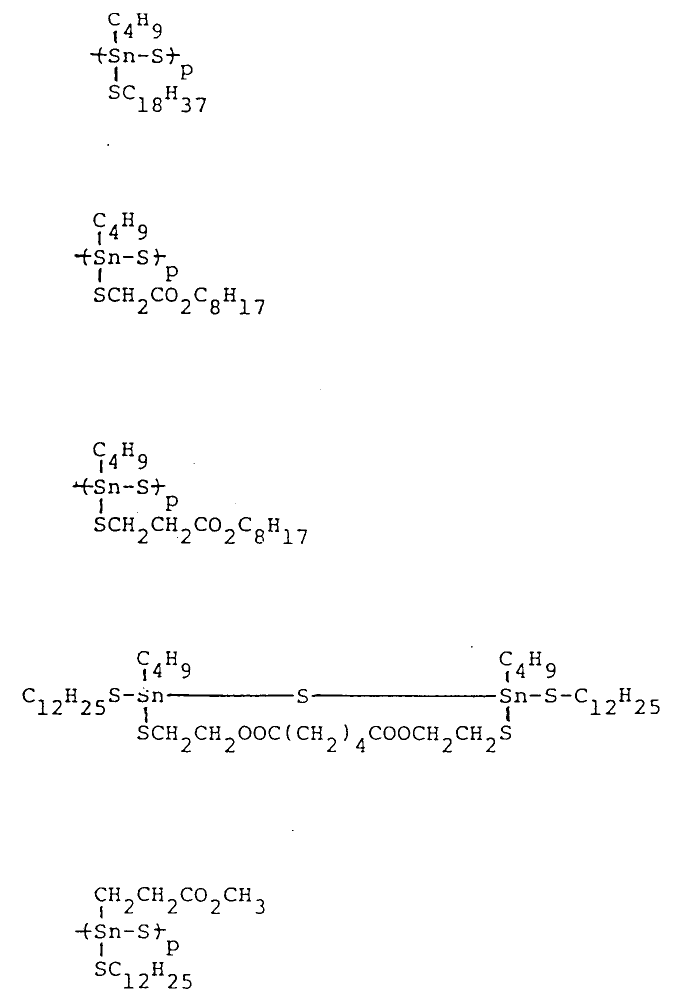 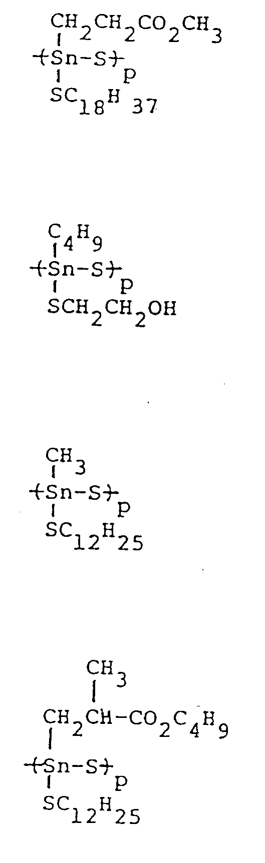 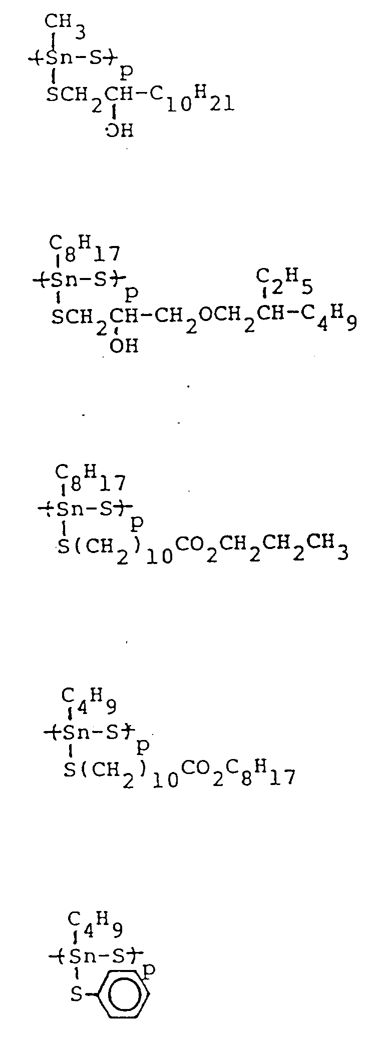 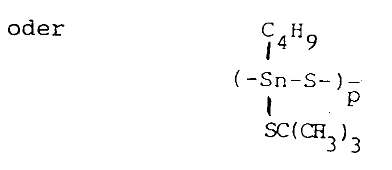 handelt.

3. Verfahren nach Anspruch 1 oder 2, dadurch **gekennzeichnet,** daß man das Antioxidans in einer Konzentration von 0,005 bis 5 Gew.-%, bezogen auf das Harz, einmischt.

4. Verfahren nach Anspruch 3, dadurch **gekennzeichnet,** daß die Konzentration etwa 0,01 bis 0,5% beträgt.

5. Verfahren nach einem der vorstehenden Ansprüche, dadurch **gekennzeichnet**, daß die Masse eine Harzmischung ist, die das Polyolefin enthält.

6. Verfahren nach einem der vorstehenden Ansprüche, dadurch **gekennzeichnet,** daß das Polyolefin ein Copolymeres von Ethylen und Propylen ist.

7. Verfahren nach einem der vorstehenden Ansprüche, dadurch **gekennzeichnet,** daß die genannte Verbindung ein Reaktionsprodukt, hergestellt durch Umsetzen eines Mono- oder Diorganozinntri- oder -dihalogenids, oder einer Mischung davon, mit einem organischen Mercaptan in Gegenwart einer Base und durch anschließendes Umsetzen des erhaltenen Gemisches mit einem anorganischen Sulfid ist.

8. Verwendung einer Verbindung der allgemeinen Formel 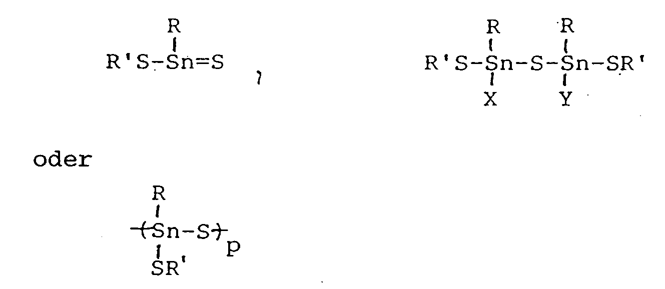 worin R, R', X und Y gleich oder verschieden sind und Alkyl, Phenyl, Cyclohexyl, einen mono- oder polyfunktionellen Carbonsäureester, Hydroxyalkyl oder Aralkyl bedeuten, wobei diese Gruppen gegebenenfalls substituiert, linear, verzweigt oder cyclisch sein können und p 2 oder mehr beträgt; als Antioxidans für eine Polyolefinmasse.

9. Verwendung nach Anspruch 8 dadurch **gekennzeichnet,** daß eine Menge von 0,005% bis 5%, bezogen auf das Gewicht des Polyolefins oder des Polyolefin enthaltenden Harzes verwendet wird.

## Revendications (Revendications pour l'(les) Etat(s) contractant(s) suivant(s): AT, BE, CH, DE, FR, GB, GR, IT, LI, LU, NL, SE)

1. Composition polyoléfinique contenant un anti-oxydant, qui comporte une polyoléfine et un composé anti-oxydant répondant à la formule générale : 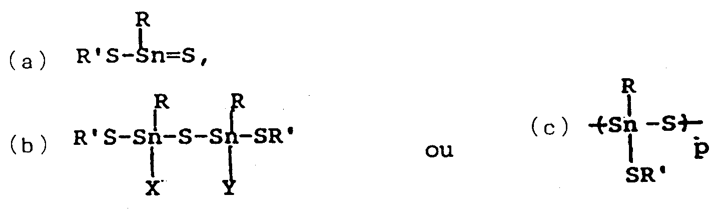 dans laquelle R, R', X et Y sont identiques ou différents et sont choisis entre un groupe alkyle, un groupe phényle, un groupe cyclohexyle, un substituant portant une ou plusieurs liaisons ester carboxylique, un groupe hydroxyalkyle et un groupe aralkyle ; et p indique le degré de polymérisation et est égal à 2 au moins.

2. Composition polyoléfinique contenant un anti-oxydant suivant la revendication 1, dans laquelle le composé anti-oxydant répond à la formule :

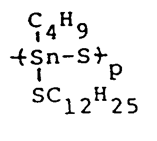

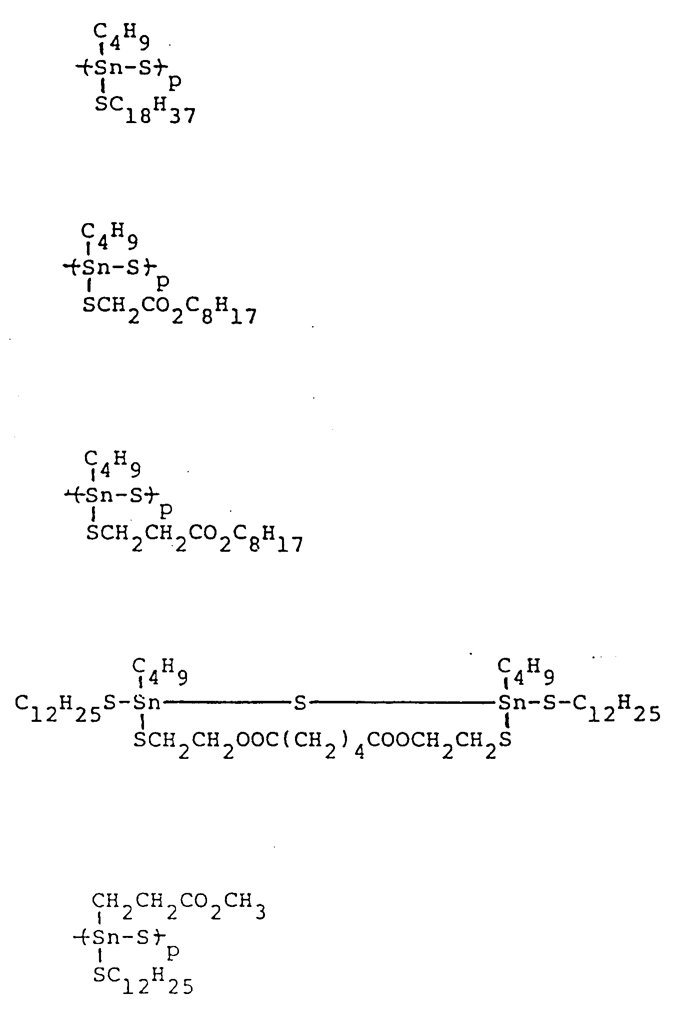

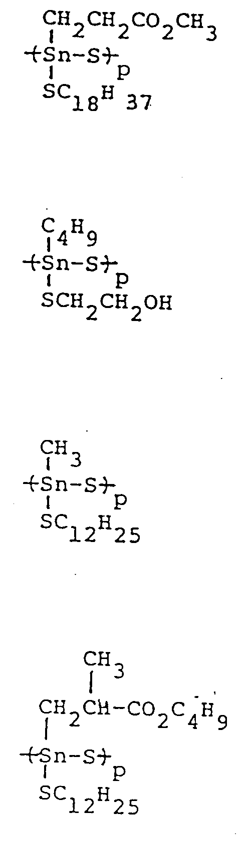

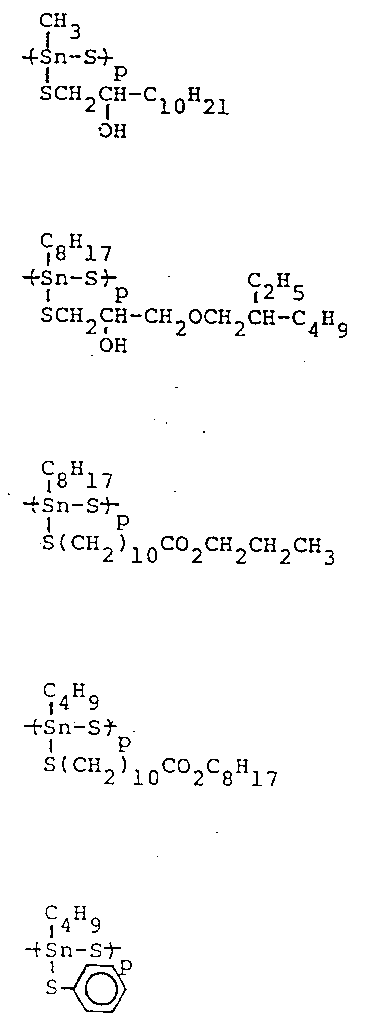

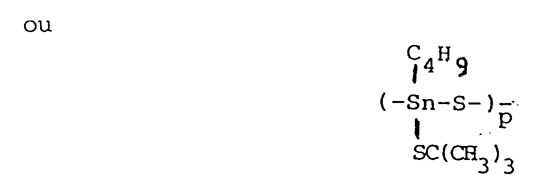

3. Composition polyoléfinique contenant un anti-oxydant suivant la revendication 1 ou la revendication 2, dans laquelle l'anti-oxydant est présent à une concentration de 0,005 à 5 % en poids de la résine.

4. Composition polyoléfinique contenant un anti-oxydant suivant la revendication 3, dans laquelle la concentration est d'au moins 0,01 à 0,5 %.

5. Composition suivant l'une quelconque des revendications précédentes, qui est un mélange à base de résine comprenant une polyoléfine.

6. Composition suivant l'une quelconque des revendications précédentes, dans laquelle la polyoléfine est un copolymère d'éthylène et de propylène.

7. Composition suivant l'une quelconque des revendications précédentes, dans laquelle le composé est un produit de réaction obtenu en faisant réagir un trihalogénure ou dihalogénure mono- ou di -organique d'étain, ou un mélange de ces composés, avec un mercaptan organique, en présence d'une base, et en faisant ensuite réagir le mélange obtenu avec un sulfure inorganique.

8. Procédé de production d'une composition polyoléfinique résistant à l'oxydation suivant l'une quelconque des revendications 1 à 7, comprenant le mélange du composé polyoléfinique avec le composé anti-oxydant.

9. Utilisation d'un composé répondant à la formule générale : 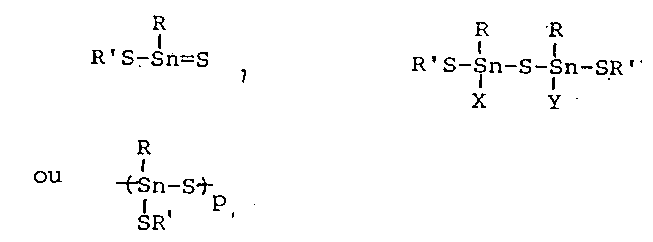 dans laquelle R, R', X et Y sont identiques ou différents et représentent un groupe alkyle, un groupe phényle, un groupe cyclohexyle, un ester d'acide carboxylique monofonctionnel ou polyfonctionnel, un groupe hydroxyalkyle ou un groupe aralkyle, ces groupes pouvant être linéaires, ramifiés ou cycliques facultativement substitués, et p est égal ou supérieur à 2 ;
comme anti-oxydant pour une composition polyoléfinique.

10. Utilisation suivant la revendication 9, en quantité de 0,005 à 5 % sur la base du poids de la polyoléfine ou de la polyoléfine comprenant la résine.

## Revendications (Revendications pour l'(les) Etat(s) contractant(s) suivant(s): ES)

1. Procédé de production d'une composition polyoléfinique contenant un anti-oxydant, comprenant le mélange d'une polyoléfine avec un composé anti-oxydant répondant à la formule générale : 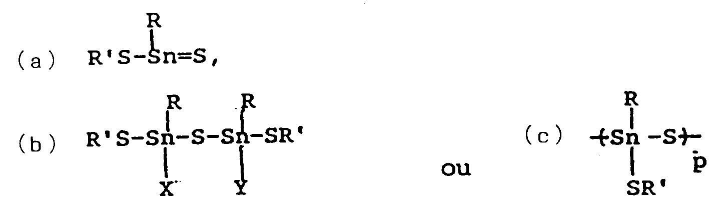 dans laquelle R, R', X et Y sont identiques ou différents et sont choisis entre un groupe alkyle, un groupe phényle, un groupe cyclohexyle, un substituant portant une ou plusieurs liaisons ester carboxylique, un groupe hydroxyalkyle et un groupe aralkyle; et p indique le degré de polymérisation et est égal à 2 au moins.

2. Procédé suivant la revendication 1, dans lequel le composé anti-oxydant est :

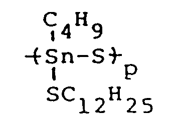

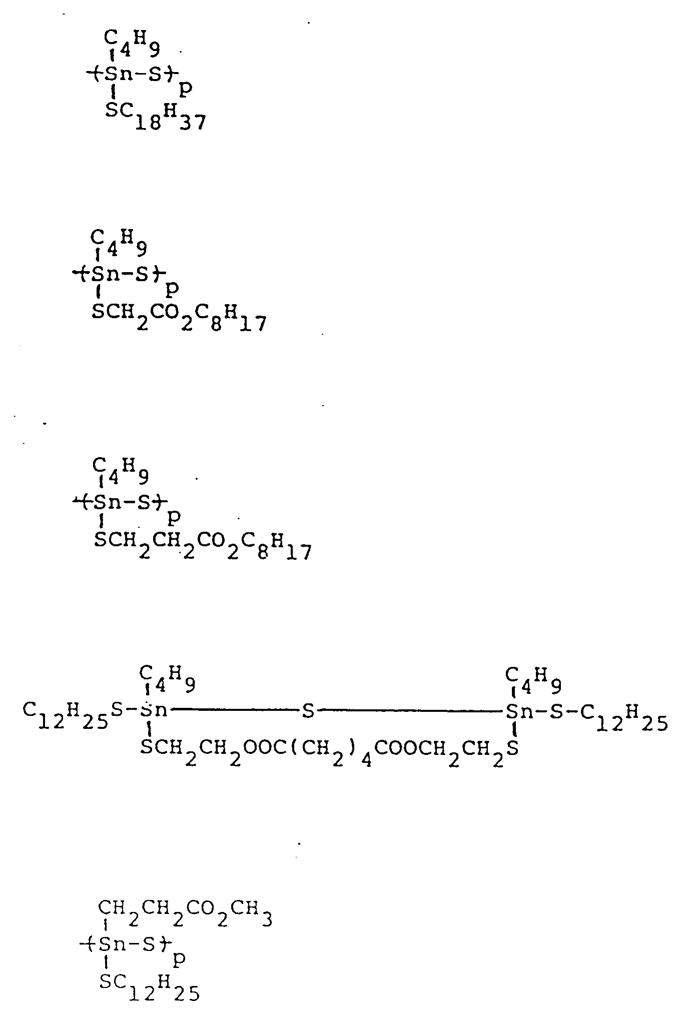

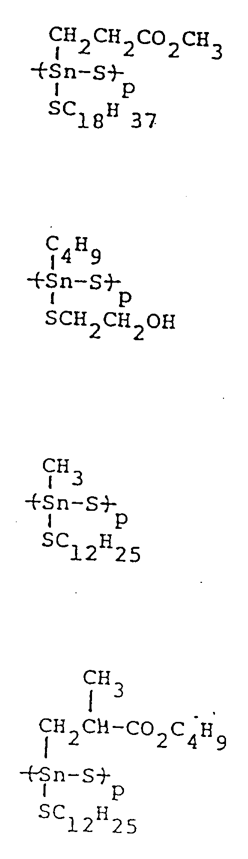

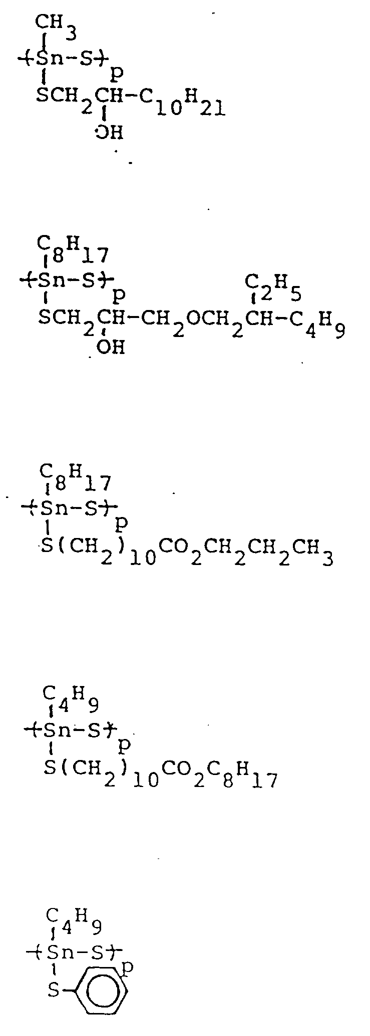

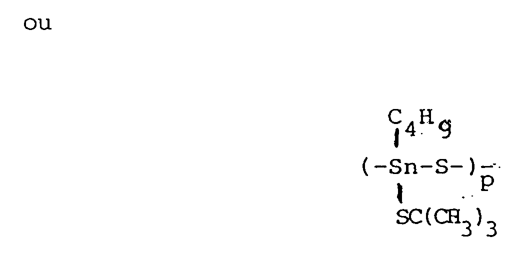

3. Procédé suivant la revendication 1 ou la revendication 2, dans lequel l'anti-oxydant est mélangé à une concentration de 0,005 à 5 % en poids de la résine.

4. Procédé suivant la revendication 3, dans lequel la concentration est d'environ 0,01 à 0,5 %.

5. Procédé suivant l'une quelconque des revendications précédentes, dans lequel la composition est un mélange à base de résine comprenant la polyoléfine.

6. Procédé suivant l'une quelconque des revendications précédentes, dans lequel la polyoléfine est un copolymère d'éthylène et de propylène.

7. Procédé suivant l'une quelconque des revendications précédentes, dans lequel le composé est un produit de réaction obtenu en faisant réagir un trihalogénure ou dihalogénure mono- ou di-organique d'étain, ou un mélange de ces composés, avec un mercaptan organique, en présence d'une base, et en faisant ensuite réagir le mélange obtenu avec un sulfure inorganique.

8. Utilisation d'un composé répondant à la formule générale : 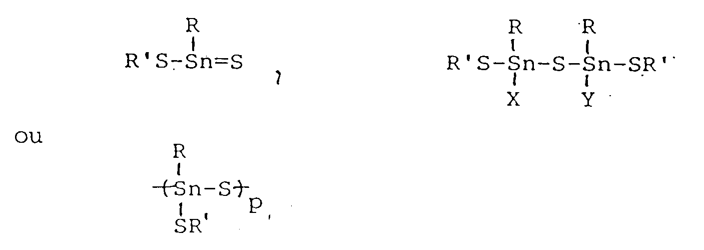 dans laquelle R, R', X et Y sont identiques ou différents et représentent un groupe alkyle, un groupe phényle, un groupe cyclohexyle, un groupe ester d'acide carboxylique monofonctionnel ou polyfonctionnel, un groupe hydroxyalkyle ou un groupe aralkyle, ces groupes pouvant être linéaires, ramifiés ou cycliques facultativement substitués et p est égal ou supérieur à 2 ;
comme anti-oxydant pour une composition polyoléfinique.

9. Utilisation suivant la revendication 8, en quantité de 0,005 à 5 % sur la base du poids de la polyoléfine ou de la polyoléfine comprenant une résine.
